**Europäisches Patentamt**

**European Patent Office**

**Office européen des brevets**

(19)

(11) Veröffentlichungsnummer: **0 339 251 B1**

(12) # EUROPÄISCHE PATENTSCHRIFT

(45) Veröffentlichungstag der Patentschrift: **02.12.92**

(51) Int. Cl.⁵: **C01B 3/38**

(21) Anmeldenummer: **89104956.1**

(22) Anmeldetag: **20.03.89**

(54) **Einrichtung zur Aufnahme von Katalysatoren, insbesondere bei der Erzeugung von Synthesegas.**

(30) Priorität: **23.04.88 DE 3813863**

(43) Veröffentlichungstag der Anmeldung:
**02.11.89 Patentblatt 89/44**

(45) Bekanntmachung des Hinweises auf die
Patenterteilung:
**02.12.92 Patentblatt 92/49**

(84) Benannte Vertragsstaaten:
**BE DE ES FR GB IT NL**

(56) Entgegenhaltungen:
**EP-A- 0 214 432**
**EP-A- 0 242 199**
**GB-A- 2 153 382**

**PATENT ABSTRACTS OF JAPAN, Band 10,
Nr. 258 (C-370), 4. September 1986; & JP-A-61
83 602 (TOSHIBA CORP.) 28-04-1986**

(73) Patentinhaber: **Uhde GmbH**
**Friedrich-Uhde-Strasse 15**
**W-4600 Dortmund 1(DE)**

(72) Erfinder: **Herbort, Hans-Joachim, Dipl.-Ing.**
**Unnaer Strasse 65B**
**W-5758 Fröndenberg(DE)**

(74) Vertreter: **Patentanwälte Meinke und Dabringhaus Dipl.-Ing. J. Meinke Dipl.-Ing. W. Dabringhaus**
**Westenhellweg 67**
**W-4600 Dortmund 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung richtet sich auf eine Einrichtung zur Aufnahme von Katalysatoren, insbesondere zur Aufnahme eines Primär- und eines Sekundärkatalysators bei der Erzeugung von Synthesegas in einem autothermen Reformer, wobei der Primärkatalysator in einer Vielzahl von parallel angeordneten Katalysatorrohren untergebracht ist.

Es gibt eine Vielzahl von derartigen Einrichtungen, insbesondere bei autothermen Reformern für Synthesegas, bei denen Primär- und Sekundärkatalysatoren vorgesehen sind, die in bestimmter Weise angeordnet werden, um die Energien bzw. Temperaturen der im Regelfalle insgesamt exothermen Reaktionen zu beherrschen und zu benutzen. Als Beispiele für die Anordnung, insbesondere von Primärkatalysatorrohren seien die DE-A 36 05 811 oder die DE-A 32 44 252 genannt. In der DE-A 35 32 413 ist angedeutet, daß das Primärkatalysatorrohrbündel von einer Schüttung umgeben sein kann, die, von Synthesegas durchströmt, auch als Sekundärkatalysator ausgebildet sein kann.

Andere Gasführungen und Anordnungen eines Sekundärkatalysators zeigen die GB-A-2 153 382 oder die EP-A-0 242 199.

Es hat sich gezeigt, daß bekannte Lösungen noch in wesentlichen Punkten verbesserungsfähig sind, insbesondere was die Ausnutzung der jeweiligen Katalysatoren angeht, die Halterung des Sekundärkatalysators, die Optimierung der Strömungskanäle, die Dichte der Rohrbündel, die Beherrschung der thermischen Dehnungen sowie die Optimierung der Baugrößen derartiger Anlagen, die mit gattungsgemäßen Einrichtungen ausgerüstet sind.

Aufgabe der Erfindung ist daher die Schaffung einer Lösung, mit der insbesondere eine kompakte, optimale Bauweise möglich ist bei Gewährleistung und Aufrechterhaltung optimaler Strömungs- und Dehnungsverhältnisse unter Ausnutzung der insgesamt exotherm stattfindenden Reaktionen.

Mit einer Einrichtung der eingangs bezeichneten Art wird diese Aufgabe gemäß der Erfindung dadurch gelöst, daß jedem Einzelrohr des Primärkatalysators ein eigener Sekundärkatalysator zugeordnet ist und daß das Einzelrohr in ein verjüngtes Führungsrohr übergeht, das den zugeordneten Sekundärkatalysator lanzenförmig durchsetzt.

Mit der Zuordnung eines Sekundärkatalysators zu jedem Einzelrohr des Rohrbündels des Primärkatalysators wird erreicht, daß die Rohrbündel des Sekundärkatalysators ausgesprochen dicht gepackt werden können, wodurch sich eine Reduzierung der Querschnitte von Druckgefäßen ergibt, die derartige Einrichtungen aufnehmen. Neben den damit verbundenen konstruktiven Vorteilen wird auch erreicht, daß die Sekundärkatalysatorbereiche optimal durchströmt werden und daß dabei die thermischen Dehnungsprobleme, die ein allen Primärrohren gemeinsam zugeordneter Sekundärkatalysator mit sich bringt, nicht auftreten.

Die Zuordnung kann dabei auf unterschiedliche Weise bei grundsätzlich gleichem Prinzip verwirklicht werden. Die lanzenförmig durchsetzenden Führungsrohre können direkt als Träger für den Sekundärkatalysator dienen, wenn dieser beispielsweise als eine Außenbeschichtung dieser Führungslanzen ausgebildet ist. Eine entsprechend dichte Packung einzelner Einrichtungen nach der Erfindung führt dann zu einer optimalen Dichte des Sekundärkatalysators.

In Verbindung mit dieser Ausgestaltung oder alternativ dazu sieht die Erfindung vor, daß ein das Primärkatalysatorrohr mit Abstand umgebendes Hüllrohr zur Rückführung des Synthesegases nach dem Durchströmen des Sekundärkatalysators vorgesehen ist. Durch diese Ausgestaltung ergibt sich zwischen dem Hüllrohr und dem Primärkatalysatorrohr ein Ringspalt, der zur Führung der Rückströmung des Synthesegases genutzt wird.

Um besonders günstige Strömungsverhältnisse im Sekundärkatalysator zu erreichen, ist vorgesehen, daß zwischen dem Sekundärkatalysatorrohr und dem Führungsrohr ein wenigstens bereichsweise perforiertes Gasableitrohr zur Rückführung des Synthesegases nach dem Durchströmen durch den Sekundärkatalysator vorgesehen ist, das mit dem zwischen dem Primärkatalysatorrohr und dem Hüllrohr gebildeten Ringspalt in Verbindung steht. Durch dieses zusätzliche Gasableitrohr wird eine radiale Strömungskomponente des Gasstromes durch den Sekundärkatalysator erzielt, wodurch der Druckverlust im Sekundärkatalysator und der Wärmeverlust des Gases im Sekundärkatalysator an das Gas in den Führungslanzen verringert wird.

Eine Ausführungsform der Erfindung zeichnet sich dadurch aus, daß das das Primärkatalysatorrohr mit Abstand umgebende Hüllrohr über den Primärkatalysator hinausgehend verlängert und zur Aufnahme des jeweils zugeordneten Sekundärkatalysators ausgebildet ist. Diese Ausgestaltung hat besondere konstruktive Vorteile, da das ohnehin vorhandene Hüllrohr einer zusätzlichen Funktion zugeführt wird, nämlich derjenigen als Containment für den Sekundärkatalysator zu dienen.

Zweckmäßig ist es, wenn im Bereich des stirnseitigen freien Endes des den Sekundärkatalysator umgebenden Hüllrohres Eintrittsöffnungen für das Synthesegas vorgesehen sind, wobei diese Eintrittsöffnungen z.B. direkt in der Stirnseite vorgesehen sein können und/oder aber im Zylindermantelbereich in unmittelbarer Nähe der Stirnseite.

Eine alternative Ausführungsform der Erfindung zeichnet sich dadurch aus, daß am freien Ende des Hüllrohres zur Aufnahme des Sekundärkatalysators ein Sekundärkatalysatorrohr mit Eintrittsöffnungen für das Synthesegas angeordnet ist. Durch dieses zusätzliche Rohr zur Aufnahme des Sekundärkatalysators können durch entsprechende geometrische Abmessungen dieses Rohres unabhängig vom Hüllrohr je nach Bedarfsfall entsprechende Sekundärkatalysatorvolumina untergebracht werden.

Besonders zweckmäßig ist es, wenn die Eintrittsöffnungen in den beiden Endbereichen des Sekundärkatalysatorrohres und die Perforationen des Gasableitrohres im Mittelbereich desselben ausgebildet sind. Dadurch wird nämlich bewirkt, daß sich der in den Sekundärkatalysator eintretende Gasstrom in zwei Teilströme aufteilt, wodurch sich die Strömungsgeschwindigkeit bei gleicher Verweilzeit im Katalysator im wesentlichen halbiert und die Druckverluste verringert werden.

Um einen größeren Raum für den Sekundärkatalysator zur Verfügung zu stellen, kann vorgesehen sein, daß der Durchmesser des Sekundärkatalysatorrohres größer als der Durchmesser des Hüllrohres ausgebildet ist.

Es ist weiterhin sehr zweckmäßig, wenn das Sekundärkatalysatorrohr ausbaubar am Hüllrohr montiert ist. Zum Auswechseln des Sekundärkatalysators braucht dann lediglich das Sekundärkatalysatorrohr ohne sonstige Maßnahmen abgenommen zu werden.

Zweckmäßige konstruktive Ausgestaltungen bestehen im Vorsehen eines Katalysatorträgers für den Primärkatalysator und eines solchen für den Sekundärkatalysator sowie im Vorsehen von Siebelementen, wobei jede einzelne Einrichtung aus Hüllrohr und Primärkatalysatorrohr ausbaubar an einem Rohrboden montiert sein kann oder in einer weiteren Ausgestaltung die hängende Bauweise in einem Rohrboden bevorzugt vorgesehen ist, ohne daß die Erfindung hierauf beschränkt wäre. D.h., die erfindungsgemäßen Einrichtungen können grundsätzlich jede Lage einnehmen, neben hängend können sie ebenso in stehender Bauweise angeordnet sein.

Die Erfindung ist nachstehend anhand der Zeichnung beispielsweise näher erläutert. Diese zeigt in:

Fig. 1 einen Schnitt durch einen Synthesegasreaktor mit hängenden Reformerrohren in vereinfachter Wiedergabe,

Fig. 2 ebenfalls in einem Schnitt einen Synthesegasreaktor nach einer abgewandelten Ausführungsform,

Fig. 3 in vergrößerter Darstellung eine Einrichtung zur Aufnahme der Katalysatoren gemäß Fig. 2 und

Fig. 4 eine abgewandelte Einrichtung zur Aufnahme der Katalysatoren.

Ein mit allgemein mit 1 bezeichneten Einrichtungen nach der Erfindung ausgerüsteter Reaktor 2 besteht aus einem oberen Reformerteil 3 und einem unteren Oxidationsbereich 4, wobei der Reformerteil von einer Vielzahl von erfindungsgemäßen Einrichtungen 1, d.h. einem Rohrbündel gebildet ist.

Der Vollständigkeit halber ist noch ein Eintrittsstutzen 5 für wenigstens eine Teilmenge von Kohlenwasserstoffhaltigem Dampf angegeben, der über einen als Hohlkörper ausgebildeten Rohrboden 6 den einzelnen Einrichtungen 1 zugeführt wird.

Im Oxidationsteil 4 sind Zuführleitungen 7 vorgesehen für weitere Medien, etwa Oxidationsmittel oder weitere Teilmengen von Kohlenwasserstoffhaltigen Gasen oder dgl. Im Bereich eines oberen Gerätedomes 8 ist ein Auslaßstutzen 9 für das Synthesegas angedeutet, die wesentlichen Gasströmungen sind durch kleine Pfeile wiedergegeben, worauf es hier nicht näher ankommt.

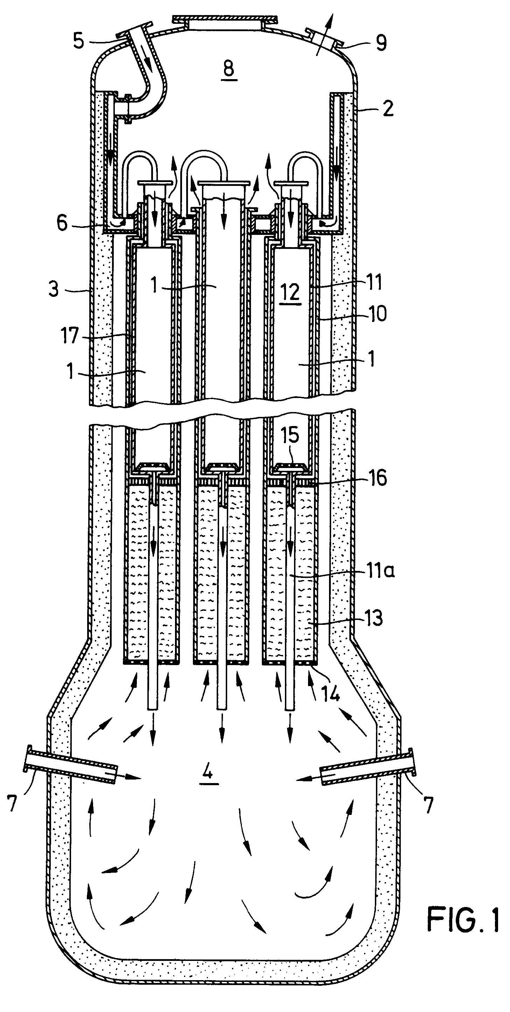

Die allgemein mit 1 bezeichneten Einrichtungen gemäß der Ausführungsform nach Fig. 1 sind als bereichsweise doppelwandige Rohre gestaltet mit einem äußeren Hüllrohr 10, welches im wesentlichen die Gesamtlänge der Einrichtung 1 ausmacht und einem inneren, bereichsweise vorgesehenen Rohr 11, welches den Primärkatalysator, mit 12 bezeichnet, umgibt und welches sich im dargestellten Beispiel im unteren Bereich lanzenförmig verjüngt. Dieser lanzenförmige Teil ist mit 11a bezeichnet.

Der lanzenförmige Teil 11a durchsetzt innen einen Sekundärkatalysator 13, der vom Hüllrohr 10 vollständig umgeben ist, wobei die Lanze 11a nach unten in den Oxidationsraum 4 über das Hüllrohr 10 hinausragend ausgebildet ist. Die mit 14 bezeichnete Stirnseite des Hüllrohres 11 weist Eintrittsöffnungen für das den Oxidationsraum 4 verlassende Gas auf und dient gleichzeitig als Katalysatorträger für den Sekundärkatalysator 13.

Im Übergangsbereich des den Primärkatalysator umgebenden Rohres 11 zum lanzenförmigen Rohrteil 11a ist ein siebförmiger Katalysatorträger 15 vorgesehen, um den Primärkatalysator 12 dort zu halten. Außen, aber noch innerhalb des Hüllrohres 10 ist in diesem Bereich eine Siebplatte 16 vorgesehen, die im dargestellten Beispiel den oberen Abschluß des Sekundärkatalysators 13 bildet, derart, daß das diesen Sekundärkatalysator 13 durchströmende Gas in den mit 17 bezeichneten Ringspalt zwischen Hüllrohr 10 und Primärkatalysatorrohr 11 einströmen kann, um in den Dombereich 8 durch den Rohrboden 6 hindurchgelangen zu können.

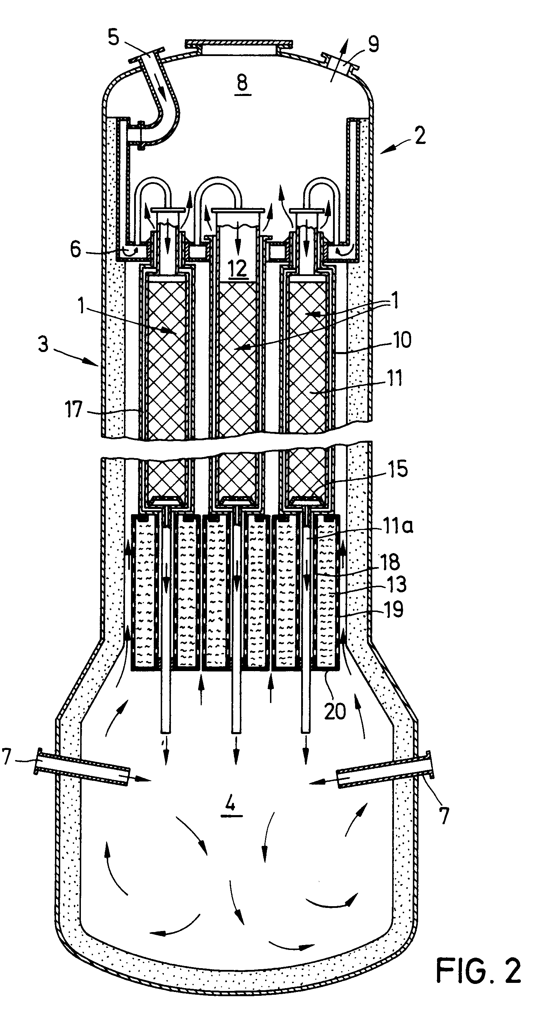

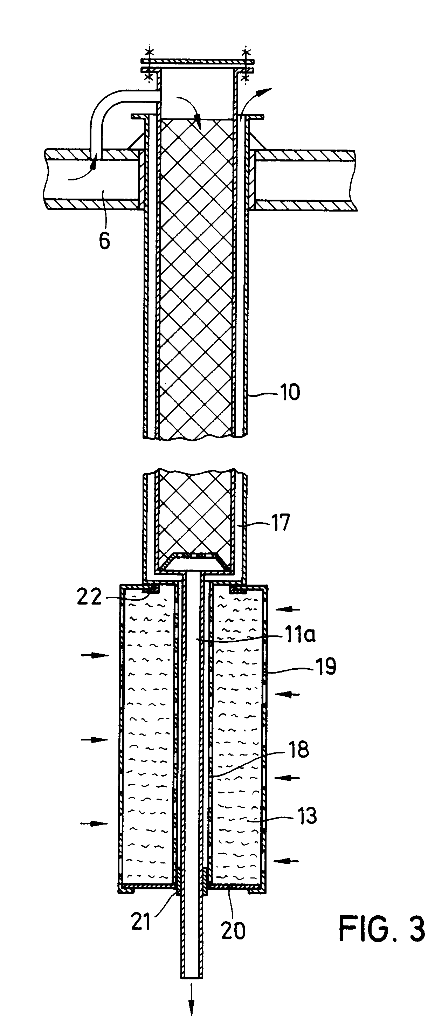

Fig. 2 zeigt eine abgewandelte Ausführungsform, wobei gleiche Bezugszeichen wie in Fig. 1 verwandt sind, sofern gleiche oder sich entsprechende Funktionsteile bezeichnet sind. Im Unterschied zur Ausführungsform nach Fig. 1 ist das das Primärkatalysatorrohr 11 umschließende Hüllrohr 10 nicht über dieses hinaus verlängert, sondern ist etwa gleichlang ausgebildet. Zur Aufnahme des Sekundärkatalysators 13 ist anstelle dessen ein Sekundärkatalysatorrohr 19 am freien Ende des Hüllrohres 10 abnehmbar angeordnet, wie dies auch aus Fig. 3 hervorgeht.

Das Sekundärkatalysatorrohr 19 weist einen größeren Durchmesser als das Hüllrohr 10 auf, so daß ein entsprechend großes Volumen für den Sekundärkatalysator 13 zur Verfügung steht. Zum freien Ende hin ist das Sekundärkatalysatorrohr 19 mit einem lösbaren, den Sekundärkatalysator 13 tragenden Boden 20 abgeschlossen, dieser Boden 20 könnte selbstverständlich auch einteilig am Sekundärkatalysatorrohr 19 angeformt sein. Im ringförmigen Spalt zwischen dem Boden 20 und dem lanzenförmigen Rohr 11a ist ein Dichtelement 21 angeordnet.

Das Sekundärkatalysatorrohr 19 ist über eine lösbare Verbindung 22 lösbar am Hüllrohr 10 befestigt, so daß es zum Auswechseln des Sekundärkatalysators 13 ohne Schwierigkeiten abgenommen werden kann, ohne daß dazu die gesamte Einrichtung abgebaut werden muß. Zum Einströmen des Synthesegases weist das Sekundärkatalysatorrohr 19 in seinem Wandbereich Eintrittsöffnungen auf, durch die das Synthesegas im wesentlichen radial von außen nach innen zu einem perforierten Gasableitrohr 18 strömt. Dieses Gasableitrohr 18 ist zwischen dem Sekundärkatalysator 13 und dem Führungsrohr 11a angeordnet und steht mit dem zwischen dem Hüllrohr 10 und dem Primärkatalysatorrohr 11 gebildeten Ringspalt 17 in Verbindung. Das Synthesegas strömt somit durch die Perforationen des Gasableitrohres 18 in den Ringspalt zwischen Gasableitrohr 18 und Führungsrohr 11a und von dort nach oben in den Ringspalt 17.

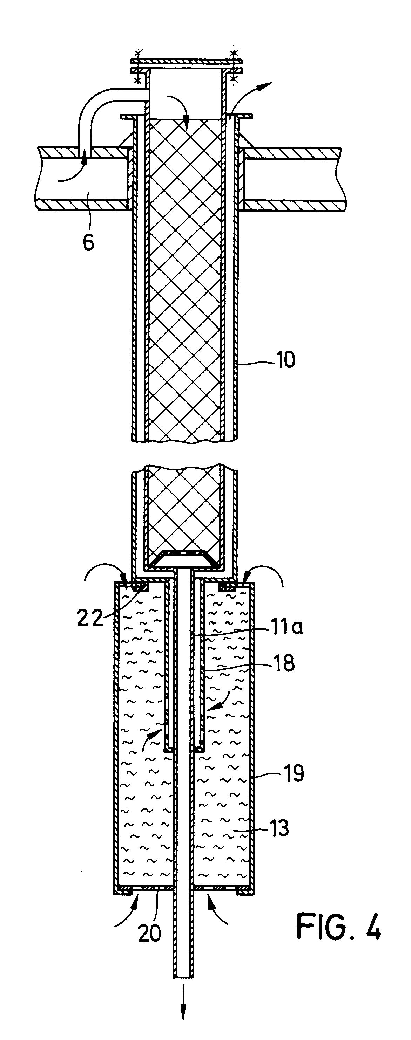

Fig. 4 zeigt eine weitere Ausführungsform der Einrichtungen 1, wobei dieselben Bezugszeichen wie in Fig. 2 und 3 verwandt sind. Das Sekundärkatalysatorrohr 19 weist bei dieser Ausführungsform im Wandbereich keine Eintrittsöffnungen auf, vielmehr sind im Boden 20 sowie im Bereich der Verbindung 22 zwischen Hüllrohr 10 und Sekundärkatalysatorrohr 19 Eintrittsöffnungen vorgesehen. Das Gasableitrohr 18 ist lediglich bis in den Mittelbereich des Sekundärkatalysators 13 ausgebildet, wobei dessen Eintrittsöffnungen nur im Mittelbereich des Sekundärkatalysators 13 vorgesehen sind.

Der Synthesegasstrom wird durch diese Ausführungsform in etwa zwei gleichgroße Teilströme aufgespalten, die entweder von unten durch den Boden 20 oder von oben durch den Bereich der Verbindung 22 in den Sekundärkatalysator 13 eintreten und dann durch die Perforationen im Gasableitrohr 18 aus diesem wieder austreten, wodurch entsprechend geringere Druckverluste und geringere Strömungsgeschwindigkeiten erreicht werden.

Natürlich ist die Erfindung nicht auf die dargestellten Ausführungsbeispiele beschränkt, vielmehr sind weitere Ausgestaltungen möglich, ohne den Grundgedanken zu verlassen. So ist die Erfindung, wie weiter oben bereits angedeutet, insbesondere nicht auf die hier abgebildete und beschreibende hängende Bauweise der Einrichtungen 1 oder die Art und Anordnung der Führungslanzen 11a innerhalb der jeweils individuell zugeordneten Sekundärkatalysatoren 13 beschränkt und dgl. mehr. Auch ist es z.B. möglich, die Rohre 18, 19 durch Drahtgewebe zu ersetzen oder auf das Rohr 19 vollständig zu verzichten, wenn ein Katalysator verwendet wird, der am Rohr 18 befestigt werden kann.

**Patentansprüche**

1. Einrichtung zur Aufnahme von Katalysatoren, insbesondere zur Aufnahme eines Primär- und eines Sekundärkatalysators bei der Erzeugung von Synthesegas in einem autothermen Reformer, wobei der Primärkatalysator in einer Vielzahl von parallel angeordneten Katalysatorrohren untergebracht ist,
dadurch gekennzeichnet,
daß jedem Einzelrohr (11) des Primärkatalysators (12) ein eigener Sekundärkatalysator (13) zugeordnet ist und daß das Einzelrohr (11) in ein verjüngtes Führungsrohr (11a) übergeht, das den zugeordneten Sekundärkatalysator (13) lanzenförmig durchsetzt.

2. Einrichtung nach Anspruch 1,
dadurch gekennzeichnet,
daß ein das Primärkatalysatorrohr (11) mit Abstand umgebendes Hüllrohr (10) zur Rückführung des Synthesegases nach dem Durchströmen des Sekundärkatalysators (13) vorgesehen ist.

3. Einrichtung nach Anspruch 1 oder 2,
dadurch gekennzeichnet,
daß zwischen dem Sekundärkatalysatorrohr (13) und dem Führungsrohr (11a) ein wenigstens bereichsweise perforiertes Gasableitrohr (18) zur Rückführung des Synthesegases nach dem Durchströmen durch den Sekundärkatalysator (13) vorgesehen ist, das mit dem zwischem dem Primärkatalysatorrohr (11) und dem Hüllrohr (10) gebildeten Ringspalt (17) in Verbindung steht.

4. Einrichtung nach Anspruch 1 oder einem der folgenden,
dadurch gekennzeichnet,
daß das das Primärkatalysatorrohr (11) mit Abstand umgebende Hüllrohr (10) über den Primärkatalysator (12) hinausgehend verlängert und zur Aufnahme des jeweils zugeordneten Sekundärkatalysators (13) ausgebildet ist.

5. Einrichtung nach Anspruch 4,
dadurch gekennzeichnet,
daß im Bereich des stirnseitigen freien Endes (14) des den Sekundärkatalysator (13) umgebenden Hüllrohres (10) Eintrittsöffnungen für das Synthesegas vorgesehen sind.

6. Einrichtung nach einem der Ansprüche 1 bis 3,
dadurch gekennzeichnet,
daß am freien Ende des Hüllrohres (10) zur Aufnahme des Sekundärkatalysators (13) ein Sekundärkatalysatorrohr (19) mit Eintrittsöffnungen für das Synthesegas angeordnet ist.

7. Einrichtung nach Anspruch 6,
dadurch gekennzeichnet,
daß die Eintrittsöffnungen in den beiden Endbereichen des Sekundärkatalysatorrohres (19) und die Perforationen des Gasableitrohres (18) im Mittelbereich des Sekundärkatalysatorrohres (19) ausgebildet sind.

8. Einrichtung nach Anspruch 6 oder 7,
dadurch gekennzeichnet,
daß der Durchmesser des Sekundärkatalysatorrohres (19) größer als der Durchmesser des Hüllrohres (10) ausgebildet ist.

9. Einrichtung nach Anspruch 6 oder einem der folgenden,
dadurch gekennzeichnet,
daß das Sekundärkatalysatorrohr (19) ausbaubar am Hüllrohr (10) montiert ist.

10. Einrichtung nach Anspruch 1 oder einem der folgenden,
dadurch gekennzeichnet,
daß im Übergangsbereich vom Primärkatalysator (12) zum verjüngten, den Sekundärkatalysator (13) durchsetzenden Führungsrohr (11a) ein Katalysatorträger (15) vorgesehen ist.

11. Einrichtung nach Anspruch 1 oder einem der folgenden
dadurch gekennzeichnet,
daß am freien Ende des Hüllrohres (10) bzw. des Sekundärkatalysatorrohres (19) ein Katalysatorträger (14 bzw. 20) vorgesehen ist.

12. Einrichtung nach Anspruch 1 oder einem der folgenden
dadurch gekennzeichnet,
daß im Übergangsbereich des Sekundärkatalysators (13) zum Ringspalt (17) zwischen Hüllrohr (10) und dem Primärkatalysatorrohr (11) ein Siebelement (16) vorgesehen ist.

13. Einrichtung nach Anspruch 1 oder einem der folgenden
dadurch gekennzeichnet,
daß jedes Hüllrohr (10) und jedes Primärkatalysatorrohr (11) ausbaubar an einem Rohrboden (6) montiert ist.

14. Einrichtung nach Anspruch 1 oder einem der folgenden
dadurch gekennzeichnet,
daß jedes Hüllrohr (10) und jedes Primärkatalysatorrohr (11) hängend an einem gemeinsamen Rohrboden (6) in einem Druckgefäß (2) angeordnet ist.

**Claims**

1. Apparatus for accommodating catalysts, in particular for accommodating a primary and a secondary catalyst in the production of synthesis gas in an autothermal reformer, wherein the primary catalyst is disposed in a plurality of catalyst tubes which are arranged in parallel, characterised in that associated with each individual tube (11) for the primary catalyst (12) is its own secondary catalyst (13) and that the individual tube (11) becomes a reduced guide tube (11a) which passes in a lance-like manner through the associated secondary catalyst (13).

2. Apparatus according to claim 1 characterised in that there is provided a jacket tube (10) which is disposed at a spacing around the primary catalyst tube (11) for returning the synthesis gas after having flowed through the secondary catalyst (13).

3. Apparatus according to claim 1 or claim 2 characterised in that provided between the secondary catalyst tube (13) and the guide tube (11a) is a gas discharge tube (18) which is perforated at least in a region-wise manner for return of the synthesis gas after having flowed through the secondary catalyst (13), which gas discharge tube communicates with the annular gap (17) formed between the primary catalyst tube (11) and the jacket tube (10).

4. Apparatus according to claim 1 or one of the following claims characterised in that the jacket tube (10) which is disposed at a spacing around the primary catalyst tube (11) is extended beyond the primary catalyst (12) and is arranged to accommodate the respectively associated secondary catalyst (13).

5. Apparatus according to claim 4 characterised in that intake openings for the synthesis gas are provided in the region of the front free end (14) of the jacket tube (10) which is disposed around the secondary catalyst (13).

6. Apparatus according to one of claims 1 to 3 characterised in that a secondary catalyst tube (19) with intake openings for the synthesis gas is arranged at the free end of the jacket tube (10) for accommodating the secondary catalyst (13).

7. Apparatus according to claim 6 characterised in that the intake openings are provided in the two end regions of the secondary catalyst tube (19) and the perforations in the gas discharge tube (18) are provided in the middle region of the secondary catalyst tube (19).

8. Apparatus according to claim 6 or claim 7 characterised in that the diameter of the secondary catalyst tube (19) is larger than the diameter of the jacket tube (10).

9. Apparatus according to claim 6 or one of the following claims characterised in that the secondary catalyst tube (19) is mounted detachably on the jacket tube (10).

10. Apparatus according to claim 1 or one of the following claims characterised in that a catalyst carrier (15) is provided in the transitional region from the primary catalyst (12) to the reduced guide tube (11a) which passes through the secondary catalyst (13).

11. Apparatus according to claim 1 or one of the following claims characterised in that a catalyst carrier (14 and 20 respectively) is provided at the free end of the jacket tube (10) and of the secondary catalyst tube (19) respectively.

12. Apparatus according to claim 1 and or of the following claims characterised in that a sieve element (16) is provided in the transitional region of the secondary catalyst (13) to the annular gap (17) between the jacket tube (10) and the primary catalyst tube (11).

13. Apparatus according to claim 1 or one of the following claims characterised in that each jacket tube (10) and each primary catalyst tube (11) is mounted detachably on a tube plate (6).

14. Apparatus according to claim 1 or one of the following claims characterised in that each jacket tube (10) and each primary catalyst tube (11) is arranged in suspended relationship on a common tube plate (6) in a pressure vessel (2).

**Revendications**

1. Dispositif destiné à recevoir des catalyseurs, notamment un catalyseur primaire et un catalyseur secondaire lors de la production de gaz de synthèse dans un reformeur autothermique, le catalyseur primaire étant logé dans une pluralité de tubes de catalyseurs agencés parallèlement entre eux, caractérisé en ce que à chaque tube individuel (11) du catalyseur primaire (12) est affecté un catalyseur secondaire propre (13) et en ce que le tube individuel (11) passe dans un tube de guidage rétréci (11a) qui traverse le catalyseur secondaire (13) en forme de lance qui lui est affecté.

2. Dispositif selon la revendication 1, caractérisé en ce qu'un tube de gainage (10) entourant le tube de catalyseur primaire (11) avec un certain espacement est prévu pour la recirculation du gaz de synthèse après le balayage du catalyseur secondaire (13).

3. Dispositif selon la revendication 1 ou 2, caractérisé en ce qu'entre le tube de catalyseur secondaire (13) et le tube de guidage (11a) il est prévu un tube de dérivation des gaz (18) pour la recirculation du gaz de synthèse après le balayage à travers le catalyseur secondaire (13), tube qui est en communication avec la fente annulaire (17) formée entre le tube de catalyseur primaire (11) et le tube de gainage (10).

4. Dispositif selon la revendication 1 ou l'une des revendications suivantes, caractérisé en ce que le tube de gainage (10) entourant le tube de catalyseur primaire (11) avec un certain espacement est prolongé au-delà du catalyseur primaire (12) et en ce qu'il est conçu pour recevoir le catalyseur secondaire (13) qui lui est respectivement affecté.

5. Dispositif selon la revendication 4, caractérisé en ce qu'au niveau de l'extrémité libre frontale (14) du tube de gainage (10) entourant le catalyseur secondaire (13) sont prévus des orifices d'entrée pour le gaz de synthèse.

6. Dispositif selon l'une des revendications 1 à 3, caractérisé en ce que sur l'extrémité libre du tube de gainage destiné à recevoir le catalyseur secondaire (13) est agencé un tube de catalyseur secondaire (19) avec des ouvertures d'entrée prévues pour le gaz de synthèse.

7. Dispositif selon la revendication 6, caractérisé en ce que les orifices d'entrée ménagés dans les deux zones d'extrémité du tube de catalyseur secondaire (19) et les perforations du tube de dérivation des gaz (18) sont formés dans la zone médiane du tube de catalyseur secondaire (19).

8. Dispositif selon la revendication 6 ou 7, caractérisé en ce que le diamètre du tube de catalyseur secondaire (19) est supérieur au diamètre du tube de gainage (10).

9. Dispositif selon la revendication 6 ou l'une des revendications suivantes, caractérisé en ce que le tube de catalyseur secondaire (19) est monté de façon amovible sur le tube de gainage (10).

10. Dispositif selon la revendication 1 ou l'une des revendications suivantes, caractérisé en ce que dans la zone de transition du catalyseur primaire (12) vers le tube de guidage (11a) au diamètre réduit traversant le catalyseur secondaire (13) est prévu un support de catalyseur (15).

11. Dispositif selon la revendication 1 ou l'une des revendications suivantes, caractérisé en ce que sur l'extrémité libre du tube de gainage (10) ou du tube de catalyseur secondaire (19) est prévu un support de catalyseur (14 ou 20).

12. Dispositif selon la revendication 1 ou l'une des revendications suivantes, caractérisé en ce que dans la zone de transition du catalyseur secondaire (13) en direction de la fente annulaire (17) entre le tube de gainage (10) et le tube de catalyseur primaire (11) il est prévu un élément de tamis (16).

13. Dispositif selon la revendication 1 ou l'une des revendications suivantes, caractérisé en ce que chaque tube de gainage (10) et chaque tube de catalyseur primaire (11) est monté de façon amovible sur un fond tubulaire (6).

14. Dispositif selon la revendication 1 ou l'une des revendications suivantes, caractérisé en ce que chaque tube de gainage et chaque tube de catalyseur primaire (11) est agencé de façon accrochée sur un fond tubulaire commun (6) dans un réservoir à pression (2).

FIG.1

FIG. 2

FIG. 3

FIG. 4